# FASCICULE DE BREVET EUROPEEN

(11) **EP 4 227 635 B1**
(45) Date de publication et mention de la délivrance du brevet: **31.07.2024**
(21) Numéro de dépôt: 22217179.5
(22) Date de dépôt: 29.12.2022
(51) Int. Cl.: F42B 35/00, G01M 7/08, G01N 3/307

(54) **DISPOSITIF ET PROCÉDÉ DE SIMULATION D'ENVIRONNEMENT DYNAMIQUE MUNITIONNAIRE POUR UN PROJECTILE, ET ENSEMBLE DISPOSITIF DE SIMULATION - PROJECTILE**
VORRICHTUNG UND VERFAHREN ZUR SIMULATION EINER DYNAMISCHEN MUNITIONSUMGEBUNG FÜR EIN GESCHOSS UND SIMULATIONSVORRICHTUNG-PROJEKTIL-ANORDNUNG
DEVICE AND METHOD FOR SIMULATING A DYNAMIC AMMUNITION ENVIRONMENT FOR A PROJECTILE, AND SIMULATION DEVICE - PROJECTILE ASSEMBLY

(30) Priorité: 10.02.2022 FR 2201028
(43) Date de publication de la demande: 16.08.2023
(73) Titulaire: KNDS Ammo France, 78000 Versailles (FR)
(72) Inventeur: PAVIER, Julien, 18023 BOURGES (FR)
(74) Mandataire: Cabinet Chaillot

(56) Documents cités:
- FR-A1- 2 897 686
- US-A1- 2015 241 326

## Description

La présente invention concerne le domaine des munitions, et porte en particulier sur un dispositif et un procédé de simulation d'environnement dynamique munitionnaire pour un projectile, et sur un ensemble dispositif de simulation - projectile associé.

Les environnements de chocs pouvant être rencontrés en milieu militaire sont simulés (c'est-à-dire, reproduits) par des simulateurs de chocs d'origine balistique ou pyrotechnique, tels que ceux exposés dans la demande de brevet français FR2897686A1, qui visent à vérifier la tenue d'équipements (destinés à être intégrés dans des véhicules militaires) subissant des chocs similaires à ceux pouvant être rencontrés dans un environnement militaire. Ces simulateurs de chocs existants permettent de recréer les conditions de sollicitation sur des portions d'équipement en ayant toujours des équipements tiers en interface (à savoir, la plaque d'impact dans la demande de brevet français FR2897686A1).

Cependant, ces simulateurs de chocs existants ne permettent pas de reproduire les environnements particuliers des chocs de sortie de bouche d'un canon rencontrés par des projectiles. En effet, les chocs de sortie de bouche de canon sont très particuliers. Un choc de sortie de bouche est la sollicitation mécanique engendrée par la sortie d'un projectile à l'extrémité d'un tube d'arme. Le projectile passe à ce moment d'une mise en accélération, où il est guidé dans un tube d'arme, à un arrêt de la poussée et une entrée dans une phase de vol. Des environnements de type chocs pyrotechniques étudiés dans les domaines spatiaux et missiliers sont souvent considérés comme proches des environnements de chocs de sortie de bouche. Différentes techniques existent pour reproduire ces environnements de chocs de sortie de bouche et reposent sur :
- la définition d'une source d'excitation (par exemple, par impact mécanique ou détonation d'un cordeau), et
- la conception d'une structure « excitée » conçue spécifiquement pour transmettre ses modes de réponses vibratoires hautes fréquences aux structures électroniques à tester et ainsi reproduire un environnement dynamique spécifié en général sous la forme d'un spectre de réponse aux chocs (SRS).

Un exemple de technique existante est illustré dans l'ouvrage « Harris' shock and vibration handbook » (« Manuel sur les chocs et les vibrations d'Harris »), cinquième édition, de Cyril M. Harris et Allan G. Piersol, à la Figure 26.15 dans le chapitre 26, partie II, ladite technique existante reposant sur l'excitation d'une unité de test, qui est suspendue, par un résonateur mécanique excité par impact. Cependant, les moyens développés dans les domaines spatiaux et missiliers sont spécifiques à ces domaines et ne permettent pas de reproduire spécifiquement des spectres de chocs de sortie de bouche. Ils permettent en général de tester la tenue d'un bloc ou d'une structure électronique enrobée, mais pas de travailler par exemple sur un concept de protection des blocs par amortissement ou découplage des modes d'une structure représentative de projectiles. La présence d'un résonateur mécanique sur le projectile viendrait, en effet, modifier la réalité structurelle du projectile.

La demande de brevet US 2015/241326 A1 constitue également un document d'art antérieur pertinent.

La présente invention vise à résoudre les inconvénients de l'état antérieur de la technique, en proposant un dispositif et un procédé de simulation d'environnement dynamique munitionnaire pour un projectile, qui permettent de reproduire un environnement de chocs spécifique à une sortie de bouche de canon du projectile, en percutant directement l'extrémité arrière du projectile qui est suspendu.

Comparée à l'état antérieur de la technique, la présente invention apporte la plus grande fidélité possible, étant donné qu'elle permet de solliciter l'objet de l'étude (c'est-à-dire, le projectile) dans son intégralité et sans artifice intermédiaire et pour un type de sollicitation précis et difficilement reproductible qu'est le choc de sortie de bouche du projectile.

La présente invention a donc pour objet un dispositif de simulation d'un environnement dynamique munitionnaire pour un projectile, le dispositif comprend : un dispositif de suspension configuré pour suspendre le projectile selon sa direction longitudinale de manière à ce que le projectile dans sa position suspendue soit monté libre selon son axe longitudinal ; un dispositif de propulsion configuré pour être disposé en regard de l'extrémité arrière du projectile dans sa position suspendue à une distance prédéfinie de celle-ci ; et un impacteur configuré pour être propulsé, par le dispositif de propulsion, à une vitesse prédéfinie vers l'extrémité arrière du projectile dans sa position suspendue afin de percuter l'extrémité arrière du projectile de manière à reproduire un spectre de réponse aux chocs spécifique à une sortie de bouche de canon du projectile.

Ainsi, le dispositif de simulation selon la présente invention permet de reproduire un environnement dynamique munitionnaire de manière à placer le projectile dans des conditions similaires à celles rencontrées lors d'un choc de sortie de bouche de canon par le projectile. Pour cela, le dispositif de propulsion permet de propulser l'impacteur à une vitesse prédéfinie vers l'extrémité arrière du projectile, qui est suspendu à l'aide du dispositif de suspension, de manière à directement percuter l'extrémité arrière du projectile. Le projectile suspendu étant libre de mouvement selon son axe longitudinal, l'impact de l'impacteur sur l'extrémité arrière du projectile permet de faire subir au projectile un choc qui est similaire à celui subi lors d'une sortie de bouche de canon par le projectile, de telle sorte qu'un spectre de réponse aux chocs spécifique à une sortie de bouche de canon du projectile peut être reproduit à l'aide du dispositif de simulation selon la présente invention.

Après l'impact, la tenue, ou tout du moins le comportement, d'équipements embarqués dans le projectile peut ensuite être vérifiée. Le dispositif de simulation selon la présente invention permet en effet de générer des spectres de réponses d'environnement de chocs de sortie de bouche en laboratoire et de récupérer des blocs instrumentés ou tout simplement l'électronique ou le matériel embarqué à bord du projectile à des fins d'expertise.

La présente invention permet ainsi de tester et de qualifier des moyens de protection des blocs/équipements embarqués dans le projectile, ce qui permet de travailler sur des solutions d'amortissement dans l'environnement réel des projectiles.

Contrairement à la solution existante dans le domaine spatial, il n'y a pas besoin, dans la présente invention, de concevoir une structure résonnante pour reproduire le système complet (fusée/missile), le projectile instrumenté étant directement excité en le frappant selon son axe longitudinal et générant ainsi les bons modes de réponses vibratoires.

Le projectile est monté libre selon son axe de sollicitation principal (à savoir, son axe longitudinal). L'impacteur et sa vitesse d'impact sont définis pour générer le bon niveau de sollicitation sur le projectile. Il est possible de faire varier les spectres de réponse du projectile en modifiant la vitesse d'impact de l'impacteur. Selon une caractéristique particulière de l'invention, l'impacteur est métallique.

Ainsi, l'excitation du projectile, dont le corps est également métallique, repose sur un impact mécanique métal/métal entre l'impacteur et l'extrémité arrière du projectile.

Selon une caractéristique particulière de l'invention, l'impacteur est un barreau métallique dont l'une des extrémités est configurée pour percuter l'extrémité arrière du projectile dans sa position suspendue.

Selon une caractéristique particulière de l'invention, le dispositif de propulsion est un canon à gaz.

Ainsi, le canon à gaz (également appelé canon à gaz léger), composé d'un réservoir contenant du gaz sous pression et d'un tube de lancement, permet d'accélérer l'impacteur à grande vitesse de manière à ce que l'impacteur percute le projectile à la vitesse d'impact prédéfinie. Pour ce faire, le réservoir du canon est d'abord rempli de gaz (principalement hélium, azote ou air) sous pression, puis ce gaz est libéré très rapidement à l'aide d'une vanne lorsque la pression souhaitée est atteinte, ce qui permet d'accélérer l'impacteur jusqu'à la sortie du tube de lancement du canon à gaz.

Selon une caractéristique particulière de l'invention, le dispositif de suspension est une ou plusieurs élingues configurées pour suspendre le projectile en dessous d'une structure de support.

Ainsi, la ou les élingues sont fixées de manière amovible à la fois au projectile et à la structure de support, de manière à suspendre le projectile selon sa direction longitudinale sous la structure de support.

Selon une caractéristique particulière de l'invention, au moins une élingue est configurée pour suspendre la partie avant du projectile à la structure de support et au moins une autre élingue est configurée pour suspendre la partie arrière du projectile à la structure de support.

La structure de support peut être tout portique ou analogue permettant de suspendre des élingues de fixation du projectile de telle sorte que le projectile soit à une hauteur suffisante par rapport au sol pour permettre son déplacement selon son axe longitudinal sans toucher le sol, le structure de support étant de préférence fixe par rapport au sol, notamment lestée voire fixée au sol, afin que la structure n'absorbe pas le choc communiqué au projectile.

Ainsi, le projectile suspendu sous la structure de support est monté libre de mouvement selon son axe longitudinal. Selon une caractéristique particulière de l'invention, le dispositif de simulation comprend en outre une caméra haute vitesse configurée pour enregistrer le comportement du projectile lors de l'impact de l'impacteur sur le projectile dans sa position suspendue.

Par caméra haute vitesse, on entend un outil utilisé pour enregistrer des images d'un objet se déplaçant rapidement, tel qu'un capteur photographique (par exemple, de type CCD (c'est-à-dire, basé sur un dispositif à transfert de charges) ou de type CMOS (c'est-à-dire, basé sur un semiconducteur complémentaire à l'oxyde de métal)) enregistrant près de 1000 images par seconde.

Ainsi, la caméra haute vitesse permet d'observer le comportement du projectile pendant un équivalent de choc de sortie de bouche, sans être gêné par la présence d'un frein de bouche ou par des gaz de tir ou par une structure de récupération de projectile.

La présente invention a également pour objet un ensemble dispositif de simulation - projectile comprenant un dispositif de simulation tel que décrit ci-dessus et un projectile instrumenté configuré pour être placé dans un environnement dynamique munitionnaire simulé à l'aide du dispositif de simulation, le projectile instrumenté comprenant un accéléromètre disposé sur ou à l'intérieur du projectile et relié à un dispositif de calcul de spectre de réponse aux chocs.

Le dispositif de simulation permet ainsi de placer le projectile instrumenté dans un environnement similaire à celui d'un choc de sortie de bouche de canon. L'accéléromètre placé sur ou à l'intérieur du projectile permet de détecter l'accélération du projectile lors de son impact par l'impacteur, et le dispositif de calcul permet, à partir des données provenant de l'accéléromètre, de calculer le spectre de réponse aux chocs résultant du choc de l'impacteur sur l'extrémité arrière du projectile instrumenté.

La présente invention a en outre pour objet un procédé de simulation d'un environnement dynamique munitionnaire pour un projectile à l'aide d'un dispositif de simulation tel que décrit ci-dessus, le procédé comprend : a) suspendre le projectile selon sa direction longitudinale à l'aide du dispositif de suspension de manière à ce que le projectile soit monté libre selon son axe longitudinal ; b) définir une vitesse de propulsion de l'impacteur permettant de reproduire un spectre de réponse aux chocs spécifique à une sortie de bouche de canon du projectile lors de l'excitation du projectile par l'impacteur ; c) propulser, à l'aide du dispositif de propulsion, l'impacteur à la vitesse de propulsion définie vers l'extrémité arrière du projectile pour percuter l'extrémité arrière du projectile selon l'axe longitudinal du projectile de manière à reproduire le spectre de réponse aux chocs spécifique à une sortie de bouche de canon du projectile.

Le procédé de simulation selon la présente invention permet ainsi de reproduire un environnement dynamique munitionnaire de manière à placer le projectile dans des conditions similaires à celles rencontrées lors d'un choc de sortie de bouche de canon par le projectile.

Selon une caractéristique particulière de l'invention, lors de l'étape c), le projectile est conditionné en température.

Ainsi, le conditionnement en température du projectile lors de l'impact du projectile par l'impacteur permet de placer le projectile dans des conditions les plus proches possibles de celles subies par le projectile lors d'une sortie de bouche de canon, la température du projectile étant choisie pour être similaire à celle atteinte par le projectile sortant d'une bouche de canon.

Selon une caractéristique particulière de l'invention, lors de l'étape c), la caméra haute vitesse enregistre le comportement du projectile lors de l'impact de l'impacteur sur le projectile.

Selon une caractéristique particulière de l'invention, le projectile intègre à l'intérieur de celui-ci au moins un bloc électronique embarqué, et le procédé comprend en outre, après l'étape c) : d) récupérer et analyser l'au moins un bloc électronique embarqué du projectile.

Après l'impact, la tenue de l'au moins un bloc électronique embarqué dans le projectile est ainsi vérifiée. Les moyens de protection de l'au moins un bloc électronique embarqué peuvent ainsi être testés et qualifiés, ce qui permet de travailler ensuite sur des solutions d'amortissement dans l'environnement réel des projectiles.

Selon une caractéristique particulière de l'invention, le procédé utilise un ensemble dispositif de simulation - projectile tel que décrit ci-dessus, caractérisé par le fait que : pendant l'étape c), l'accéléromètre mesure l'accélération du projectile pendant l'impact de l'impacteur sur le projectile ; et après l'étape c), le dispositif de calcul de spectre de réponse aux chocs calcule le spectre de réponse aux chocs résultant dudit impact.

Pour mieux illustrer l'objet de la présente invention, on va en décrire ci-après, à titre illustratif et non limitatif, un mode de réalisation préféré, avec référence aux dessins annexés.

Sur ces dessins :
[Fig. 1] est une vue schématique en perspective d'un ensemble dispositif de simulation - projectile selon la présente invention ; et
[Fig. 2] représente différents spectres de réponse aux chocs obtenus à l'aide de l'ensemble dispositif de simulation - projectile de la Figure 1.

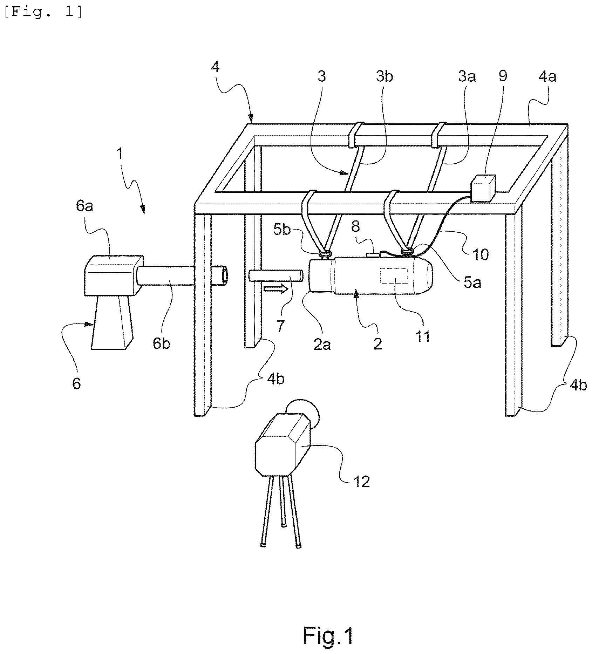

Si l'on se réfère à la Figure 1, on peut voir qu'il y est représenté un ensemble dispositif de simulation - projectile selon la présente invention comprenant un dispositif de simulation 1 et un projectile 2, le dispositif de simulation 1 permettant de reproduire un environnement dynamique munitionnaire de type choc de sortie de bouche de canon pour le projectile 2.

Le dispositif de simulation 1 comprend un dispositif de suspension 3 configuré pour suspendre le projectile 2 selon sa direction longitudinale de manière à ce que le projectile 2 dans sa position suspendue soit monté libre selon son axe longitudinal.

Le dispositif de suspension 3 est constitué d'une première élingue 3a permettant de suspendre la partie avant du projectile 2 à une structure de support 4 et d'une seconde élingue 3b permettant de suspendre la partie arrière du projectile 2 à la structure de support 4.

Il est à noter que le dispositif de suspension 3 pourrait également être constitué d'un nombre quelconque d'élingues, sans s'écarter du cadre de la présente invention.

La structure de support 4, de type portique, comprend un cadre rectangulaire horizontal 4a et quatre montants verticaux 4b disposés aux quatre coins du cadre 4a et permettant de surélever ce dernier. La structure de support 4 est de préférence rendue fixe par rapport au sol, étant notamment lestée ou fixée directement au sol.

Un premier anneau 5a est fixé sur la partie avant du projectile 2, la première élingue 3a étant insérée dans le premier anneau 5a et les deux extrémités de la première élingue 3a étant fixées à deux côtés opposés du cadre 4a, respectivement.

De manière identique, un second anneau 5b est fixé sur la partie arrière du projectile 2, la seconde élingue 3b étant insérée dans le second anneau 5b et les deux extrémités de la seconde élingue 3b étant fixées auxdits deux côtés opposés du cadre 4a, respectivement.

Le dispositif de simulation 1 comprend en outre un dispositif de propulsion 6 disposé selon la direction longitudinale du projectile 2 suspendu, en regard de l'extrémité arrière 2a du projectile 2 suspendu à une distance prédéfinie de cette dernière, et un impacteur 7 de type barreau métallique configuré pour être propulsé par le dispositif de propulsion 6 à une vitesse prédéfinie vers l'extrémité arrière 2a du projectile 2 suspendu afin d'obtenir un impact métal/métal entre l'extrémité arrière 2a du projectile 2 et l'une des extrémités de l'impacteur 7 de type barreau métallique.

Le dispositif de propulsion 6 est un canon à gaz léger, composé d'un réservoir 6a contenant du gaz sous pression et d'un tube de lancement 6b, qui permet d'accélérer l'impacteur 7 à grande vitesse de manière à ce que ce dernier percute le projectile 2 à une vitesse d'impact prédéfinie.

Le projectile 2 est un projectile instrumenté comprenant un accéléromètre 8 disposé sur le projectile 2 et relié, par un fil 10, à un dispositif de calcul 9 disposé sur le cadre 4a de la structure de support 4.

Il est à noter que l'accéléromètre 8 pourrait également être disposé à l'intérieur du projectile 2 et relié de manière sans fil au dispositif de calcul 9, sans s'écarter du cadre de la présente invention.

L'accéléromètre 8 permet de détecter l'accélération du projectile 2 lors de son impact par l'impacteur 7, et le dispositif de calcul 9 permet, à partir des données provenant de l'accéléromètre 8, de calculer le spectre de réponse aux chocs résultant du choc de l'impacteur 7 sur l'extrémité arrière 2a du projectile 2.

Le dispositif de simulation 1 permet ainsi de reproduire un environnement dynamique munitionnaire permettant de placer le projectile 2 dans des conditions similaires à celles rencontrées lors d'un choc de sortie de bouche de canon, et est conçu de manière à ce que l'impact du projectile 2 par l'impacteur 7 génère un spectre de réponse aux chocs qui est similaire à celui d'une sortie de bouche de canon du projectile 2.

Le projectile 2 instrumenté intègre à l'intérieur de celui-ci au moins un bloc électronique embarqué 11.

Après l'impact, la tenue, ou tout du moins le comportement, du bloc électronique embarqué 11 peut être vérifiée. La présente invention permet ainsi de tester et de qualifier des moyens de protection du bloc électronique embarqué 11 dans le projectile 2, ce qui permet de travailler ensuite sur des solutions d'amortissement dans l'environnement réel du projectile 2.

La vitesse d'impact de l'impacteur 7 sur le projectile 2 est choisie de manière à générer le bon niveau de sollicitation sur le projectile 2 pour simuler un choc de sortie de bouche de canon. Le spectre de réponse aux chocs calculé par le dispositif de calcul 9 dépend ainsi de la valeur choisie pour la vitesse d'impact, de telle sorte que la modification de la vitesse d'impact permet de faire varier le spectre de réponse aux chocs calculé.

Le dispositif de simulation 1 comprend en outre une caméra haute vitesse 12 permettant d'enregistrer le comportement du projectile 2 lors de l'impact de l'impacteur 7 sur l'extrémité arrière 2a du projectile 2, ce qui permet d'observer le comportement du projectile 2 pendant un équivalent de choc de sortie de bouche, sans être gêné par la présence d'un frein de bouche ou par des gaz de tir ou par une structure de récupération de projectile.

Le dispositif de simulation 1 permet ainsi de mettre en œuvre un procédé de simulation d'environnement dynamique munitionnaire pour le projectile 2 comprenant les étapes suivantes :
- suspendre le projectile 2 selon sa direction longitudinale à l'aide du dispositif de suspension 3 de manière à ce que le projectile 2 soit monté libre selon son axe longitudinal ;
- définir une vitesse de propulsion de l'impacteur 7 permettant de reproduire un spectre de réponse aux chocs spécifique à une sortie de bouche de canon du projectile 2 lors de l'excitation du projectile 2 par l'impacteur 7 ;
- facultativement, conditionner en température le projectile 2 à une température similaire à celle atteinte en sortie de bouche de canon ;
- propulser, à l'aide du dispositif de propulsion 6, l'impacteur 7 à la vitesse de propulsion définie vers l'extrémité arrière 2a du projectile 2 ;
- percuter, à l'aide de l'impacteur 7 propulsé, l'extrémité arrière 2a du projectile 2 selon l'axe longitudinal du projectile 2 de manière à reproduire le spectre de réponse aux chocs spécifique à une sortie de bouche de canon du projectile 2 ;
- mesurer, à l'aide de l'accéléromètre 8, l'accélération du projectile 2 pendant l'impact de l'impacteur 7 sur le projectile 2 ;
- facultativement, enregistrer, à l'aide de la caméra haute vitesse 12, le comportement du projectile 2 lors de l'impact de l'impacteur 7 sur le projectile 2 ;
- calculer, à l'aide du dispositif de calcul 9, à partir des données provenant de l'accéléromètre 8, le spectre de réponse aux chocs résultant de l'impact ; et
- récupérer et analyser le bloc électronique embarqué 11 du projectile 2.

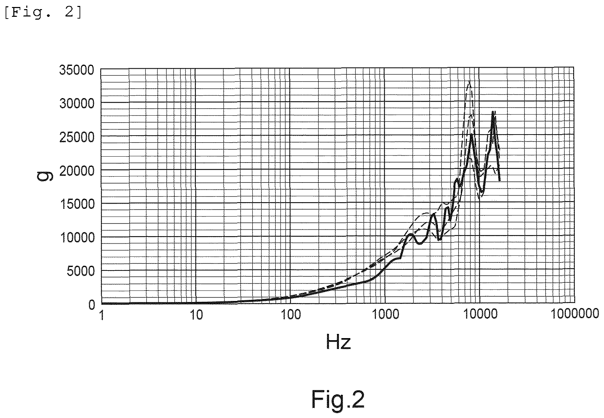

Si l'on se réfère à la Figure 2, on peut voir qu'il y est représenté trois spectres de réponse aux chocs (représentés en pointillé) du projectile 2 obtenus en condition simulée de sortie de bouche de canon à l'aide du dispositif de simulation 1, et un spectre de réponse aux chocs (représenté en trait plein) du projectile 2 obtenu en condition réelle de sortie de bouche de canon lors d'un tir en arme.

Un spectre de réponse aux chocs est une représentation graphique d'un choc dans laquelle l'axe horizontal représente la fréquence naturelle (en Hz) d'un système à un seul degré de liberté hypothétique et l'axe vertical montre l'accélération maximale (en unités de g) que ce système à un seul degré de liberté subirait en conséquence de l'entrée de choc.

On peut remarquer sur la Figure 2 que les spectres de réponse aux chocs obtenus à l'aide du dispositif de simulation 1 suivent l'allure du spectre de réponse aux chocs obtenu en condition réelle de sortie de bouche de canon. Le dispositif de simulation 1 selon la présente invention permet ainsi de reproduire avec une grande fidélité les conditions d'un choc de sortie de bouche de canon sur le projectile 2.

Il est bien entendu que le mode de réalisation particulier qui vient d'être décrit a été donné à titre indicatif et non limitatif, et que des modifications peuvent être apportées sans que l'on s'écarte pour autant de la présente invention, qui est définie par les revendications annexées.

## Revendications

1. Dispositif de simulation (1) d'un environnement dynamique munitionnaire pour un projectile (2), le dispositif comprend :
- un dispositif de suspension (3) configuré pour suspendre le projectile (2) selon sa direction longitudinale de manière à ce que le projectile (2) dans sa position suspendue soit monté libre selon son axe longitudinal,
- un dispositif de propulsion (6) configuré pour être disposé en regard de l'extrémité arrière (2a) du projectile (2) dans sa position suspendue à une distance prédéfinie de celle-ci, et
- un impacteur (7) configuré pour être propulsé, par le dispositif de propulsion (6), à une vitesse prédéfinie vers l'extrémité arrière (2a) du projectile (2) dans sa position suspendue afin de percuter l'extrémité arrière (2a) du projectile (2) de manière à reproduire un spectre de réponse aux chocs spécifique à une sortie de bouche de canon du projectile (2).

2. Dispositif de simulation (1) selon la revendication 1, **caractérisé par le fait que** l'impacteur (7) est métallique.

3. Dispositif de simulation (1) selon la revendication 2, **caractérisé par le fait que** l'impacteur (7) est un barreau métallique dont l'une des extrémités est configurée pour percuter l'extrémité arrière (2a) du projectile (2) dans sa position suspendue.

4. Dispositif de simulation (1) selon l'une des revendications 1 à 3, **caractérisé par le fait que** le dispositif de propulsion (6) est un canon à gaz.

5. Dispositif de simulation (1) selon l'une des revendications 1 à 4, **caractérisé par le fait que** le dispositif de suspension (3) est une ou plusieurs élingues (3a, 3b) configurées pour suspendre le projectile (2) en dessous d'une structure de support (4).

6. Dispositif de simulation (1) selon la revendication 5, **caractérisé par le fait qu'**au moins une élingue (3a) est configurée pour suspendre la partie avant du projectile (2) à la structure de support (4) et au moins une autre élingue (3b) est configurée pour suspendre la partie arrière du projectile (2) à la structure de support (4) .

7. Dispositif de simulation (1) selon l'une des revendications 1 à 6, **caractérisé par le fait qu'**il comprend en outre une caméra haute vitesse (12) configurée pour enregistrer le comportement du projectile (2) lors de l'impact de l'impacteur (7) sur le projectile (2) dans sa position suspendue.

8. Ensemble dispositif de simulation - projectile comprenant un dispositif de simulation (1) selon l'une des revendications 1 à 7 et un projectile (2) instrumenté configuré pour être placé dans un environnement dynamique munitionnaire simulé à l'aide du dispositif de simulation (1), le projectile (2) instrumenté comprenant un accéléromètre (8) disposé sur ou à l'intérieur du projectile (2) et relié à un dispositif de calcul de spectre de réponse aux chocs (9).

9. Procédé de simulation d'un environnement dynamique munitionnaire pour un projectile (2) à l'aide d'un dispositif de simulation (1) selon l'une des revendications 1 à 7, le procédé comprend :
a) suspendre le projectile (2) selon sa direction longitudinale à l'aide du dispositif de suspension (3) de manière à ce que le projectile (2) soit monté libre selon son axe longitudinal,
b) définir une vitesse de propulsion de l'impacteur (7) permettant de reproduire un spectre de réponse aux chocs spécifique à une sortie de bouche de canon du projectile (2) lors de l'excitation du projectile (2) par l'impacteur (7),
c) propulser, à l'aide du dispositif de propulsion (6), l'impacteur (7) à la vitesse de propulsion définie vers l'extrémité arrière (2a) du projectile (2) pour percuter l'extrémité arrière (2a) du projectile (2) selon l'axe longitudinal du projectile (2) de manière à reproduire le spectre de réponse aux chocs spécifique à une sortie de bouche de canon du projectile (2).

10. Procédé selon la revendication 9, **caractérisé par le fait que**, lors de l'étape c), le projectile (2) est conditionné en température.

11. Procédé selon la revendication 9 ou 10 en dépendance de la revendication 7, **caractérisé par le fait que**, lors de l'étape c), la caméra haute vitesse (12) enregistre le comportement du projectile (2) lors de l'impact de l'impacteur (7) sur le projectile (2).

12. Procédé selon l'une des revendications 9 à 11, **caractérisé par le fait que** le projectile (2) intègre à l'intérieur de celui-ci au moins un bloc électronique embarqué (11), et le procédé comprend en outre, après l'étape c) :
d) récupérer et analyser l'au moins un bloc électronique embarqué (11) du projectile (2).

13. Procédé selon l'une des revendications 9 à 12 utilisant un ensemble selon la revendication 8, **caractérisé par le fait que** :
- pendant l'étape c), l'accéléromètre (8) mesure l'accélération du projectile (2) pendant l'impact de l'impacteur (7) sur le projectile (2), et
- après l'étape c), le dispositif de calcul de spectre de réponse aux chocs (9) calcule le spectre de réponse aux chocs résultant dudit impact.

## Patentansprüche

1. - Vorrichtung (1) zur Simulation einer dynamischen Munitionsumgebung für ein Projektil (2), die Vorrichtung umfassend:
- eine Aufhängevorrichtung (3), die konfiguriert ist, um das Projektil (2) entlang seiner Längsrichtung aufzuhängen, sodass das Projektil (2) in seiner aufgehängten Position entlang seiner Längsachse frei montiert ist,
- eine Antriebsvorrichtung (6), die konfiguriert ist, um gegenüber dem hinteren Ende (2a) des Projektils (2) in seiner aufgehängten Position in einem vordefinierten Abstand davon angeordnet ist, und
- einen Impaktor (7), der konfiguriert ist, um von der Antriebsvorrichtung (6) mit einer vordefinierten Geschwindigkeit in Richtung des hinteren Endes (2a) des Projektils (2) in seiner aufgehängten Position angetrieben zu werden, um auf das hintere Ende (2a) des Projektils (2) aufzuschlagen, um ein Stoßreaktionsspektrum zu reproduzieren, das für einen Mündungsaustritt des Projektils (2) spezifisch ist.

2. - Simulationsvorrichtung (1) nach Anspruch 1, **dadurch gekennzeichnet, dass** der Impaktor (7) metallisch ist.

3. - Simulationsvorrichtung (1) nach Anspruch 2, **dadurch gekennzeichnet, dass** der Impaktor (7) ein Metallstab ist, dessen eines Ende konfiguriert ist, um auf das hintere Ende (2a) des Projektils (2) in seiner aufgehängten Position aufzuschlagen.

4. - Simulationsvorrichtung (1) nach einem der Ansprüche 1 bis 3, **dadurch gekennzeichnet, dass** die Antriebsvorrichtung (6) eine Gaskanone ist.

5. - Simulationsvorrichtung (1) nach einem der Ansprüche 1 bis 4, **dadurch gekennzeichnet, dass** die Aufhängevorrichtung (3) eine oder mehrere Schlingen (3a, 3b) ist, die konfiguriert sind, um das Projektil (2) unterhalb einer Tragestruktur (4) aufzuhängen.

6. - Simulationsvorrichtung (1) nach Anspruch 5, **dadurch gekennzeichnet, dass** mindestens eine Schlinge (3a) konfiguriert ist, um den vorderen Abschnitt des Projektils (2) an der Tragestruktur (4) aufzuhängen, und mindestens eine weitere Schlinge (3b) konfiguriert ist, um den hinteren Abschnitt des Projektils (2) an der Tragestruktur (4) aufzuhängen.

7. - Simulationsvorrichtung (1) nach einem der Ansprüche 1 bis 6, **dadurch gekennzeichnet, dass** sie ferner eine Hochgeschwindigkeitskamera (12) umfasst, die konfiguriert ist, um das Verhalten des Projektils (2) beim Aufprall des Impaktors (7) auf das Projektil (2) in seiner aufgehängten Position aufzuzeichnen.

8. - Simulationsvorrichtungs-/Projektilanordnung, umfassend eine Simulationsvorrichtung (1) nach einem der Ansprüche 1 bis 7 und ein instrumentiertes Projektil (2), das konfiguriert ist, um in eine dynamische Munitionsumgebung platziert zu werden, die mittels der Simulationsvorrichtung (1) simuliert wird, das instrumentierte Projektil (2) umfassend einen Beschleunigungsmesser (8), der auf oder in dem Projektil (2) angeordnet und mit einer Stoßreaktionsspektrum-Berechnungsvorrichtung (9) verbunden ist.

9. - Verfahren zum Simulieren einer dynamischen Munitionsumgebung für ein Projektil (2) mittels einer Simulationsvorrichtung (1) nach einem der Ansprüche 1 bis 7, das Verfahren umfassend
a) Aufhängen des Projektils (2) in seiner Längsrichtung mittels der Aufhängevorrichtung (3), sodass das Projektil (2) entlang seiner Längsachse frei montiert ist,
b) Definieren einer Antriebsgeschwindigkeit des Impaktors (7), die es ermöglicht, ein Stoßreaktionsspektrum zu reproduzieren, das spezifisch für einen Mündungsaustritt des Projektils (2) bei der Erregung des Projektils (2) durch den Impaktor (7) ist,
c) Antreiben, mittels der Antriebsvorrichtung (6), des Impaktors (7) mit der definierten Antriebsgeschwindigkeit in Richtung des hinteren Endes (2a) des Projektils (2), um auf das hintere Ende (2a) des Projektils (2) entlang der Längsachse des Projektils (2) aufzuschlagen, um das für einen Mündungsaustritt des Projektils (2) spezifische Stoßreaktionsspektrum zu reproduzieren.

10. - Verfahren nach Anspruch 9, **dadurch gekennzeichnet, dass** in Schritt c) das die Temperatur des Projektils (2) angepasst wird.

11. - Verfahren nach Anspruch 9 oder 10 abhängig von Anspruch 7, **dadurch gekennzeichnet, dass** in Schritt c) die Hochgeschwindigkeitskamera (12) das Verhalten des Projektils (2) beim Aufprall des Impaktors (7) auf das Projektil (2) aufzeichnet.

12. - Verfahren nach einem der Ansprüche 9 bis 11, **dadurch gekennzeichnet, dass** das Projektil (2) in seinem Inneren mindestens einen eingebetteten Elektronikblock (11) integriert, und das Verfahren nach Schritt c) ferner Folgendes umfasst:
d) Bergen und Analysieren des mindestens einen eingebetteten Elektronikblocks (11) des Projektils (2).

13. - Verfahren nach einem der Ansprüche 9 bis 12 unter Verwendung einer Anordnung nach Anspruch 8, **dadurch gekennzeichnet, dass**:
- während des Schritts c) der Beschleunigungsmesser (8) die Beschleunigung des Projektils (2) während des Aufpralls des Impaktors (7) auf das Projektil (2) misst, und
- nach Schritt c) die Stoßreaktionsspektrum-Berechnungsvorrichtung (9) das Stoßreaktionsspektrum berechnet, das aus dem Aufprall resultiert.

## Claims

1. - A simulation device (1) of a dynamic munition-related environment for a projectile (2), wherein the device comprises:
- a suspension device (3) configured for suspending the projectile (2) along its longitudinal direction so that the projectile (2) in its suspended position is mounted free along its longitudinal axis,
- a propulsion device (6) configured for being arranged facing the rear end (2a) of the projectile (2) in its suspended position at a predefined distance from it, and
- an impactor (7) configured for being propelled, by the propulsion device (6), at a predetermined velocity toward the rear end (2a) of the projectile (2) in its suspended position, so as to strike the rear end (2a) of the projectile (2) so as to reproduce a shock response spectrum specific to an exit of the projectile (2) from a muzzle.

2. - The simulation device (1) according to claim 1, **characterized by** the fact that the impactor (7) is metallic.

3. - The simulation device (1) according to claim 2, **characterized by** the fact that the impactor (7) is a metal bar, one of its ends being configured for striking the rear end (2a) of the projectile (2) in its suspended position.

4. - The simulation device (1) according to one of claims 1 to 3, **characterized by** the fact that the propulsion device (6) is a gas gun.

5. - The simulation device (1) according to one of claims 1 to 4, **characterized by** the fact that the suspension device (3) is one or serveral slings (3a, 3b) configured for suspending the projectile (2) under a support structure (4).

6. - The simulation device (1) according to claim 5, **characterized by** the fact that at least one sling (3a) is configured for suspending the front part of the projectile (2) from the support structure (4) and at least one further sling (3b) is configured for suspending the rear part of the projectile (2) from the support structure (4) .

7. - The simulation device (1) according to one of claims 1 to 6, **characterized by** the fact that it further comprises a high-speed camera (12) configured for recording the behavior of the projectile (2) when the impactor (7) impacts the projectile (2) in its suspended position.

8. - A simulation device-projectile assembly comprising a simulation device (1) according to one of claims 1 to 7 and an instrumented projectile (2) configured for being placed in a dynamic munition-related environment simulated by means of the simulation device (1), the instrumented projectile (2) comprising an accelerometer (8) arranged either on or inside the projectile (2) and connected to a shock response spectrum computing device (9) .

9. - A method of simulating a dynamic munition-related environment for a projectile (2) using a simulation device (1) according to one of claims 1 to 7, wherein the method comprises:
a) suspending the projectile (2) along its longitudinal direction using the suspension device (3) so that the projectile (2) is mounted freely along its longitudinal axis,
b) defining a propulsion velocity of the impactor (7) for reproducing a shock response spectrum specific to exit of the projectile (2) from the muzzle when the projectile (2) is excited by the impactor (7),
c) propelling, by means of the propulsion device (6), the impactor (7) at the propulsion velocity defined towards the rear end (2a) of the projectile (2) so as to strike the rear end (2a) of the projectile (2) along the longitudinal axis of the projectile (2) so as to reproduce the shock response spectrum specific to an exit of the projectile (2) from a muzzle.

10. - The method according to claim 9, **characterized by** the fact that, during the step c), the projectile (2) is temperature-conditioned.

11. - The method according to claim 9 or 10 when dependent on claim 7, **characterized by** the fact that, during the step c), the high-speed camera (12) records the behavior of the projectile (2) upon impact of the impactor (7) on the projectile (2).

12. - The method according to any of claims 9 to 11, **characterized by** the fact that at least one onboard electronic unit (11) is incorporated in the projectile (2), and the method further comprises, after the step c):
d) recovering and analyzing the at least one onboard electronic unit (11) of the projectile (2).

13. - The method according to any of claims 9 to 12 using an assembly according to claim 8, **characterized by** the fact that:
- during the step c), the accelerometer (8) measures the acceleration of the projectile (2) during the impact of the impactor (7) on the projectile (2), and
- after the step c), the shock response spectrum computing device (9) computes the shock response spectrum resulting from the impact.
